# EUROPEAN PATENT APPLICATION

(11) **EP 1 872 833 A1**
(43) Date of publication of application: **02.01.2008**
(21) Application number: 07012822.8
(22) Date of filing: 29.06.2007
(51) Int. Cl.: A63B 22/02, B65G 39/16

(54) **Device for signalling a treadmill belt misalignment**

(30) Priority: 30.06.2006 BR PI0602943
(71) Applicant: BRUDDEN EQUIPAMENTOS LTDA, Pompéia SP (BR)
(72) Inventor: Saito, Luiz Paulo, Primavera Pompéia - SP (BR)
(74) Representative: Geyer, Fehners & Partner

(57) **Abstract**

The treadmill is of the type which comprises: a chassis (10); an upper structure (20); a front roller (14) and a rear roller (15) that are horizontally journalled in said chassis (10), and an endless belt (30) mounted around the front roller (14) and rear roller (15) and presenting an upper path (31) and a lower path. The device comprises two optical sensor assemblies (40), each comprising an optical emitting means, disposed above or beneath the lower path of said endless belt (30), and an optical receiving means (42), disposed in the other of said positions, said optical sensor assemblies (40) operating between a belt aligned condition, interrupting the luminous flux from said optical emitting means to said optical receiving means (42), and a belt misaligned condition, in which said belt allows the optical flux between one of said optical emitting means and a respective optical receiving means (42) which is operatively associated with a visual and/or sonorous signalizing means (18) to activate said signalizing means (18) upon the misalignment of the belt (30).

## Description

### Field of the invention

The present invention refers to a device for monitoring the operation of a treadmill and, more particularly, to a device for signalizing a treadmill belt misalignment.

### Prior Art

The known treadmills are appliances intended for the practice of physical exercises and rehabilitation and consist of an endless belt in the form of a blanket, preferably made of canvas, which is stretched by a pair of cylindrical rollers, one of them being a driving roller and, the other, a stretching/aligning roller of said belt, said rollers being sustained by a metallic structure that supports the equipment and maintains it seated on the floor.

Such appliances are activated by a driving motor which activates the driving roller, and this transmits, through a belt or other means, the rotation to the stretching/aligning roller and this, on its turn, makes the belt rotate around the driving roller and the stretching/aligning roller.

In the central portion of the equipment structure, between the horizontal upper and lower paths of the belt, there is rigidly and statically provided a generally flat and rectangular elongated deck, which serves as a support for the user's feet and for his weight, and on which the belt slides. When in operation, the belt slides on the elongated deck, whilst the user, standing on said elongated deck, has his stepping movement commanded by the relative displacement of the belt which, on its turn, is activated by the electric motor.

In the treadmills, the shaft of the stretching/aligning roller is journalled in parallel horizontal longitudinal members of the equipment chassis, by means of bearings which are releasably retained, such as by screws, and displaced along said longitudinal members, in order to be selectively affixed along said longitudinal members, for tensioning the belt. In order to help to align said belt, the external surface of the stretching/aligning roller is slightly funnel-shaped at the ends.

As a consequence of the wear of the fibers of the canvas that form the endless belt, such as by drawing, rupture, deformation, or abrasion, a generally uneven loosening of the canvas occurs, requiring the necessary compensation by re-tensioning, repositioning, as needed, one or both the shaft bearings of said stretching/aligning roller.

The alignment of the endless belt is visually verified and requires a frequent inspection of the equipment, so that the necessary corrective measures can be taken as soon as possible.

Nevertheless, as the inspections are unusual or not so frequent as would be necessary, the loosening and consequent misalignment of the canvas belt makes the latter scrape in determined points of the metallic structure of the equipment, damaging or rupturing the canvas belt, by abrasion.

### Summary of the Invention

On account of the deficiency mentioned above and related to the known treadmills, it is a general object of the present invention to provide a device for signalizing a treadmill belt misalignment which permanently monitors the alignment of said belt, signalizing the existence of a belt deviation greater than a predetermined maximum.

It is also an object of the present invention to provide a device for signalizing a treadmill belt misalignment, as defined above and which, by signalizing the belt misalignments in due time, prevents damages and even losses by abrasion of said belt, contributing to substantially increase its useful lifetime.

These and other objects and advantages of the present invention are attained through the provision of a device for signalizing a treadmill belt misalignment, to be used in a treadmill of the type which comprises: an elongated chassis seated on the floor; an upper structure mounted to the front portion of the chassis, for the user to hold and control the operation; a front roller and a rear roller, which are horizontally journalled in said chassis; and an endless belt, mounted around the front and rear rollers and presenting an upper path and a lower path.

According to the invention, the device for signalizing a treadmill belt misalignment further comprises two optical sensor assemblies, each comprising an optical emitting means, disposed in one of the positions above or beneath the lower path of said belt, and an optical receiving means, disposed in the other of said positions, said optical sensor assemblies operating between a belt aligned condition, in which the belt interrupts the luminous flux from said optical emitting means to the respective optical receiving means in each optical sensor assembly, and a belt misaligned condition, in which the belt allows the optical flux between one of said optical emitting means and a respective optical receiving means, said optical receiving means being operatively coupled to a visual and/or sonorous signalizing means mounted to the chassis.

### Brief Description of the Drawings

The invention will be described below, with reference to the enclosed drawings, given by way of example of a possible embodiment of the invention and in which:
Figure 1 schematically represents a longitudinal vertical sectional view of a treadmill;
Figure 2 schematically represents a horizontal sectional view of the treadmill, taken according to line II-II of figure 1;
Figure 3 schematically represents a cross-sectional view of the treadmill, taken according to line III-III of figure 1;
Figure 4 schematically represents an enlarged cross-sectional view of a longitudinal member, illustrating a first embodiment of the device object of the invention, in the belt aligned condition, interrupting the light beam of the device;
Figure 5 represents a view similar to that of figure 4, but illustrating the device object of the invention in the belt misaligned condition, giving passage to the light beam of the device;
Figure 6 schematically represents a detail in perspective view of the lower face of the optical emitting means of the present invention, illustrating the board in which is mounted the led (which emits light);
Figure 7 schematically represents an enlarged cross-sectional view of a longitudinal member, illustrating a second embodiment of the device object of the invention, in the belt misaligned condition, giving passage to the light beam of the device; and
Figure 8 schematically represents an enlarged cross-sectional view of a longitudinal member, illustrating a third embodiment of the device object of the invention, in the belt misaligned condition, giving passage to the light beam of the device.

### Detailed Description of the Invention

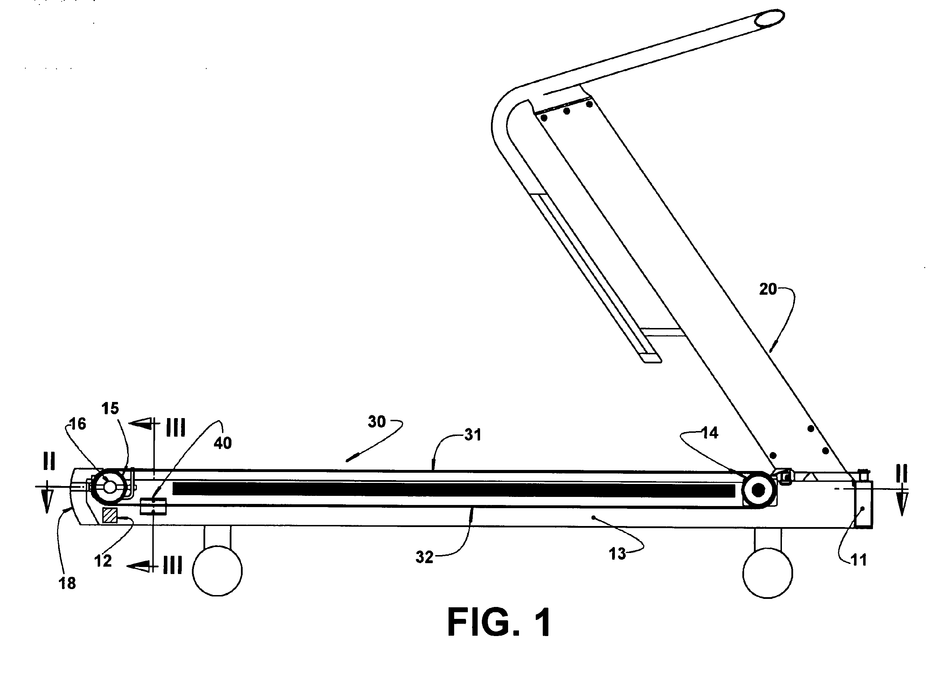

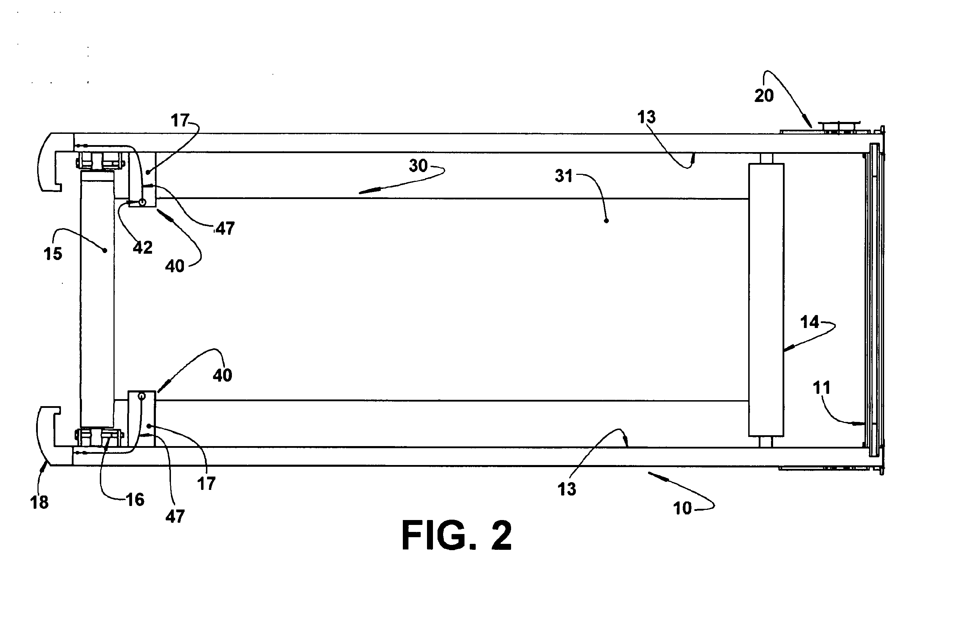

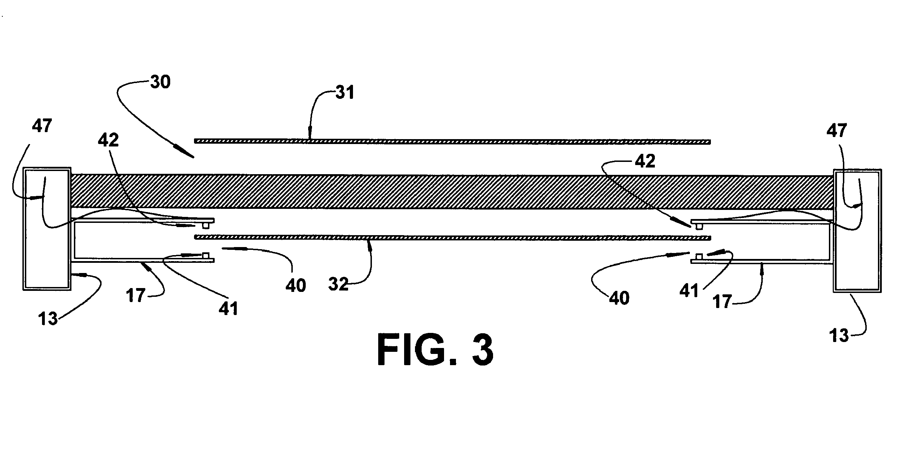

As illustrated in figures 1-8, the present invention refers to a device for signalizing a treadmill belt misalignment, to be applied to a treadmill of the type which comprises a generally rectangular and substantially horizontal elongated chassis 10, comprising a front cross-member 11 and a rear cross member 12, connected by their ends to corresponding longitudinal members 13. In the front portion of said chassis 10 is mounted an upper structure 20 to be held by the user, including an operation control panel of the equipment.

The chassis 10 of the treadmill presents, journalled in its longitudinal members 13, a front roller 14 and a rear roller 15. In the illustrated embodiment, the front roller is fixedly journalled in the front portion of the longitudinal members 13, and is coupled to an adequate driving means, such as an electric motor, not illustrated, whereby the front roller 14 defines a driving roller, the rear roller 15 being tightly journalled to said longitudinal members 13 through bearings that are selectively and independently attached along a delimited extension of the longitudinal members 13, said rear roller 15 defining a stretching/aligning roller.

Around the front roller 14 and the rear roller 15 is mounted an endless belt 30, preferably made of canvas, whose running defines an upper path 31 and a lower path 32, the adjustment of the tension and alignment of said belt being obtained through a screw 16, adequately coupled to the corresponding bearing of the rear roller 15, in order to give a better stretching/aligning function, said screw being threaded through the shaft of said roller.

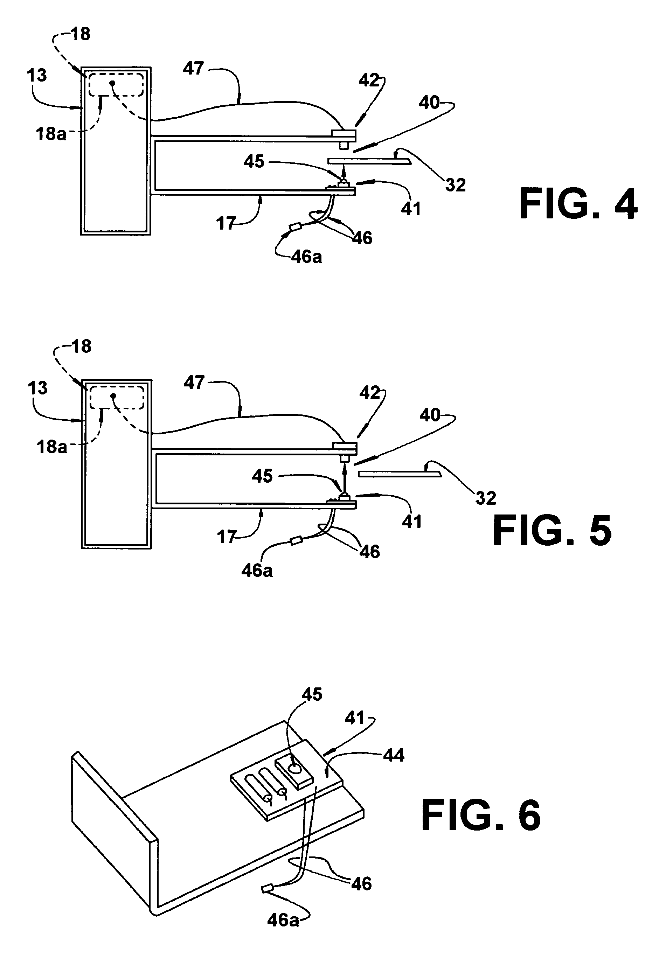

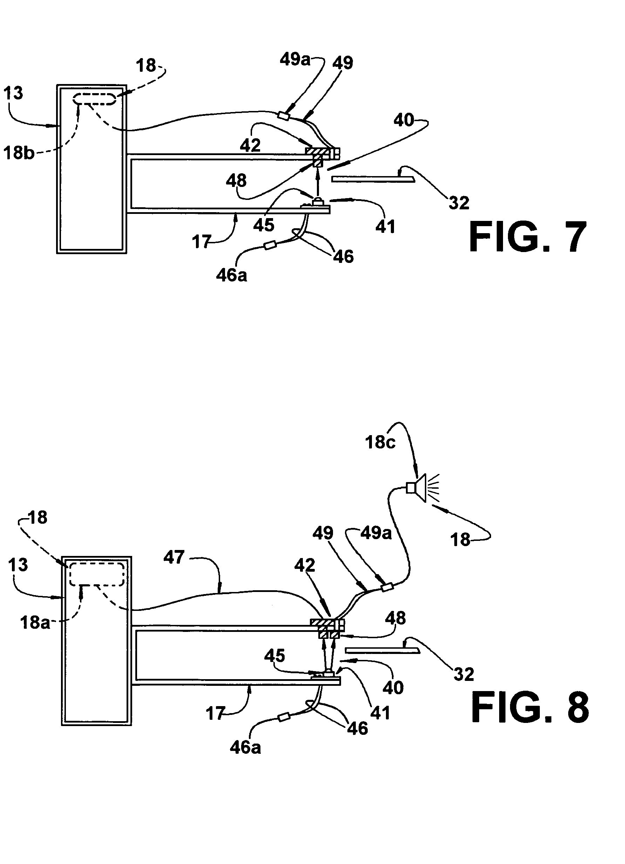

According to the present invention, in order to ensure that the operation of adjusting the belt 30 will be made in due time, i.e., as soon as another degree of looseness of the belt 30 occurs, there is provided a device for signalizing a treadmill belt misalignment, comprising two optical sensor assemblies 40, each comprising: an optical emitting means 41, preferably defined by a printed circuit board 44 incorporating a narrow-focus led 45 fed by electric current, through a pair of conductors 46 which define a harness provided with a connector 46a; and an optical receiving means 42 which, as illustrated in figures 4, 5 and 8, can comprise an optical fiber 47 affixed, by adequate means, with its end turned to the led (light emitter) 45 of the corresponding optical emitting means 41, the other end of said optical fiber 47 being coupled to a signalizing means 18, disposed in an easily visualized position, for example, projecting upwards and outwards from the chassis 10, in the form of a display 18a provided at the rear end of the respective longitudinal member 13 and utilized in the first embodiment of the invention, illustrated in figures 4 and 5, and in the third embodiment illustrated in figure 8.

Each optical sensor assembly 40, as described above, is mounted to a substantially "C"-shaped support 17, the optical emitting means 41 and the optical receiving means 42 each being attached to an end of said support 17 and this, on its turn, being attached to a corresponding longitudinal member 13 of the chassis 10, in such a manner that each assembly of optical emitting means 41/optical receiving means 42 remains disposed towards the inside of the adjacent nominal lateral alignment of the belt 30, above and beneath the lower path 32 of the latter, so that, in the aligned condition of the belt 30, the latter interrupts the luminous flux between each optical emitting means 41 and the respective optical receiving means 42, in both side portions of the belt 30, and in the misaligned condition of the belt 30, a side portion of the belt 30 allows for the luminous flux from the optical emitting means 41 to the optical receiving means 42, the light being easily visible by observing the protective display 18, which is operatively connected to the optical receiving means 42 by means of the optical fiber 47 (see figures 4, 5 and 8) .

By passing near the treadmill, the user, or the person in charge of the maintenance, visualizes the light focus of the display 18a, indicating misalignment of the belt 30 and further informing which screw 16, that stretches the shaft of the rear roller 15, must suffer intervention to reestablish the alignment of the belt 30 and, consequently, to extinguish the light passing through the optical fiber 47 towards the signalizing means 18 which, in this first embodiment, has the form of a display 18a of any known construction.

In a preferred embodiment of the invention, the optical emitting means 41 are disposed at the lower end of the support 17, with the corresponding leds 45 turned upwards, and the optical receiving means 42 are disposed at the upper end of the support 17, with the ends of the corresponding optical fibers 47 turned downwards. However, the inversion of said means 41, 42 is equally functional.

In a second embodiment, illustrated in figure 7, the optical fiber 47 associated with the optical receiving means 42 is substituted by a phototransistor 48 which operates as an optical receiving means 42 and which feeds, through wires 49, a signalizing means 18 in the form of a signalizing led 18b disposed in an easily visualized place in the treadmill structure.

In a third embodiment, as illustrated in figure 8, the optical receiving means 42 can comprise both the optical fiber 47 and a phototransistor 48 disposed a little more inwards in relation to the edge of the lower path 32 of the endless belt 30, emitting signals through the electrical conductors 49 forming a harness with the connector 49a, said phototransistor 48, in the belt misaligned condition, receiving the luminous beam emitted by the led 45 of the emitting means 41. In this solution, if the luminous signal transmitted to the display 18a by the optical fiber 47, to indicate that due corrective measures must be adopted for re-tensioning and consequently realigning the belt 30 is ignored, the phototransistor 48 is triggered by the light of the led 45 to activate a sound alarm 18c, or also send a message to a control panel (not illustrated) of the treadmill.

In a further embodiment of the invention, the manual adjustment of the alignment may be automated by the provision of a reducer driven by a micro-motor, not illustrated.

## Claims

1. A device for signalizing a treadmill belt misalignment, utilized in a treadmill of the type which comprises: an elongated chassis (10) seated on the floor; an upper structure (20) mounted in the front portion of the chassis (10), for the user to hold and control the operation; a front roller (14), and a rear roller (15) which are horizontally journalled in said chassis (10); and an endless belt (30) mounted around the front roller (14) and the rear roller (15) and presenting an upper path (31) and a lower path (32), **characterized in that** it comprises two optical sensor assemblies (40), each comprising an optical emitting means (41), disposed in one of the positions above or beneath the lower path (32) of said belt (30), and an optical receiving means (42), disposed in the other of said positions, said optical sensor assemblies (40) operating between a belt aligned condition, in which said belt interrupts the luminous flux of said optical emitting means (41) for the respective optical receiving means (42) in each optical sensor assembly (40), and a belt misaligned condition, in which said belt allows the optical flux between one of said optical emitting means (41) and a respective optical receiving means (42), said optical receiving means (42) being operatively coupled to a visual and/or sonorous signalizing means (18) mounted to the chassis (10), to activate said signalizing means (18) upon the misalignment of the belt (30).

2. Device, as set forth in claim 1, **characterized in that** each optical sensor assembly (40) is mounted in a support (17) attached in a corresponding longitudinal member (13).

3. Device, as set forth in claim 2, **characterized in that** the support (17) is substantially "C"-shaped, with its ends projecting towards the inside of the nominal lateral alignment of the belt (30), above and beneath the lower path (32) of said belt.

4. Device, as set forth in claim 3, **characterized in that** the optical emitting means (41) are disposed in the lower ends of said supports (17), and the optical receiving means (42) are disposed in the upper ends of said supports (17).

5. Device, as set forth in claim 1, **characterized in that** each said optical emitting means (41) comprises a printed circuit board (44) incorporating a narrow focus led (45) fed by electric current.

6. Device, as set forth in any one of claims 1 or 5, **characterized in that** each optical receiving means (42) comprises an optical fiber (47), having an end turned to the led (45) of the corresponding optical emitting means (41), the other end of said optical fiber (47) being coupled to the signalizing means (18).

7. Device, as set forth in claim 6, **characterized in that** the signalizing means (18) is a display (18a) mounted to the chassis (10).

8. Device, as set forth in any one of claims 1 or 5, **characterized in that** the optical receiving means (42) comprises a phototransistor (48) aligned with the led (45) in a such way that, in the belt misaligned condition, it receives luminous signals from said led (45), said phototransistor (48) activating a signalizing led (18b) attached to one of the parts of chassis (10) and upper structure (20), in a place of easy visualization.

9. Device, as set forth in any one of claims 1 or 5, **characterized in that** the optical receiving means (42) comprises: an optical fiber (47) having an end turned to the led (45) of the corresponding optical emitting means (41) and another end coupled to a respective signalizing means (18); and a phototransistor (48) disposed toward the inside of the adjacent end of the optical fiber (47) and aligned with the led (45) in a such way that, in a belt condition presenting a greater misalignment than the one necessary to release the luminous flux of the adjacent led (45) to the respective optical fiber (47), said phototransistor (48) receives luminous signals from said led (45), activating a sound alarm, or displaying a message in the control panel.
